# EUROPÄISCHE PATENTANMELDUNG

(11) **EP 2 159 032 A1**
(43) Veröffentlichungstag der Anmeldung: **03.03.2010**
(21) Anmeldenummer: 08014960.2
(22) Anmeldetag: 25.08.2008
(51) Int. Cl.: B29C 45/16, F16L 47/03

(54) **Verfahren zur Herstellung von Elektrofusionsspritzgussteilen**

(71) Anmelder: ifw Manfred Otte GmbH, 4563 Micheldorf (AT)
(72) Erfinder: Ebner, Josef, Ing., 4563 Micheldorf (AT); Eigruber, Sebastian, DI, 4052 Ansfelden (AT); Demmel, Andreas, Ing., 4810 Gmunden (AT)
(74) Vertreter: Landgraf, Elvira

(57) **Zusammenfassung**

Die Erfindung betrifft Elektrofusionsspritzgussteile, die in einem Mehrkomponentenspritzgussverfahren hergestellt werden können.

## Beschreibung

Die Erfindung betrifft ein Verfahren zur Herstellung von Elektrofusionsspritzgussteilen, wie Elektrofusionsmuffen, Elektrofusionsfittings, Elektrofusionssätteln und dergleichen.

Gemäß dem bekannten Stand der Technik werden Elektrofusionsspritzgussteile in einem mehrstufigen Herstellungsverfahren gefertigt, Dabei wird in einem ersten Schritt ein so genanntes Pre-Teil im Spritzgussverfahren hergestellt, in einem zweiten Schritt der Widerstandsdraht in einer getrennten Anlage oder Station auf das Pre-Teil aufgebracht bzw. gewickelt und in einem dritten Schritt das mit dem Widerstandsdraht versehene Pre-Teil zum fertigen Bauteil umspritzt.
Dieses mehrstufige Verfahren ist relativ zeitaufwendig und damit sehr kostenintensiv.

Aufgabe der Erfindung war es, ein Verfahren zur Herstellung von Elektrofusionsspritzgussteilen bereitzustellen, bei dem in einem einzigen Arbeitsgang auf einfache und kostengünstige Weise Elektrofusionsspritzgussteile hergestellt werden können.

Gegenstand der Erfindung ist daher ein Verfahren zur Herstellung von Elektrofusionsspritzgussteilen, dadurch gekennzeichnet, dass die Elektrofusionsspritzgussteile in einem Mehr-Komponentenspritzgussverfahren hergestellt werden.

Als Widerstandskomponente geeignet sind alle elektrisch leitfähigen Materialien, insbesondere Polymere deren Schmelzpunkt höher liegt als der Schmelzpunkt des für die Außenhaut des Spritzgussteils verwendeten Polymeren.
Als elektrisch leitfähige Polymere kommen beispielsweise Polyacetylen, Polyamide, Poly-p-phenylen, Polypyrrole, Polythiophene, Poly-p-phenylenvinylen, niedermolekulare makrocyclische Halbleiter, Organopolysilane, Polyschwefelnitrid und/oder Polyaniline und/oder deren Derivate in Frage.
Ferner ist es auch möglich duroplastische Polymere oder Polymermischungen als Widerstandskomponente zu verwenden
Es können aber auch Kunststoff/metallhybride als Widerstandskomponente verwendet werden.

Gegebenenfalls können die elektrisch leitfähigen Polymere, die duroplastischen Polymere oder Polymermischungen organische, anorganische oder metallische Partikel oder Nanopartikel zur Einstellung des spezifischen Widerstands aufweisen.
Diese Zusatzstoffe können beispielsweise aus der Gruppe Graphit, Ruß, Metallpigmente (beispielsweise Kupfer, Aluminium, Silber, Gold, Eisen, Chrom und dergleichen), Metalllegierungen wie Kupfer-Zink oder Kupfer-Aluminium oder auch amorphe oder kristalline keramische Pigmente wie ITO, ATO, FTO gewählt werden.

Die Partikel können in Faserform oder auch als sphärische Partikel vorliegen und eine Größe von 1 nm - 25 µm aufweisen.
Der Anteil der Partikel in der Mischung kann 1 - 99Gew% betragen.

In jedem Fall muss der spezifische Widerstand so eingestellt sein, dass eine genügende elektrische Leitfähigkeit für die weitere Verarbeitung erreicht wird.

Im Wesentlichen wird der notwendige Widerstand durch die Partikelgröße, den Anteil der Partikel im Polymer oder der Polymermischung, den Querschnitt und die Leitungslänge der Widerstandskomponente eingestellt.

Als Kunststoffe, die im Spritzguss mit der Widerstandskomponente zu Elektrofusionsspritzgussteilen verarbeitet werden, kommen beispielsweise Hart-PVC, C(chloriertes)-PVC Polyolefine, bspw. gefüllte oder nicht gefüllte Polypropylene, LDPE, HDPE, MDPE, PPR, PPSU, ABS, PC, PVDF, PSX, Polybutylen, Polybuten, glasfaser-, mineralfaser- oder naturfasergefüllte Kunststoffe oder deren Copolymere, Mischungen oder Blends in Frage.

In einer Ausführungsform des Verfahrens wird dabei die Widerstandskomponente in das Werkzeug eingelegt. Dies kann per Hand oder mittels eines Automaten erfolgen. Anschließend wird die Form geschlossen und die Außenhaut (der Fittingkörper) im Spritzguss hergestellt.

Nach dem Öffnen der Form kann das Spritzgussteil entnommen oder ausgeworfen werden.

In einer weiteren Ausführungsform wird zuerst die Außenhaut des Spritzgussteils gespritzt. Nach ausreichendem Aushärten des Spritzgussteils wird die Kammer, in die die Widerstandskomponente eingespritzt werden soll, freigegeben und die Widerstandskomponente eingespritzt.

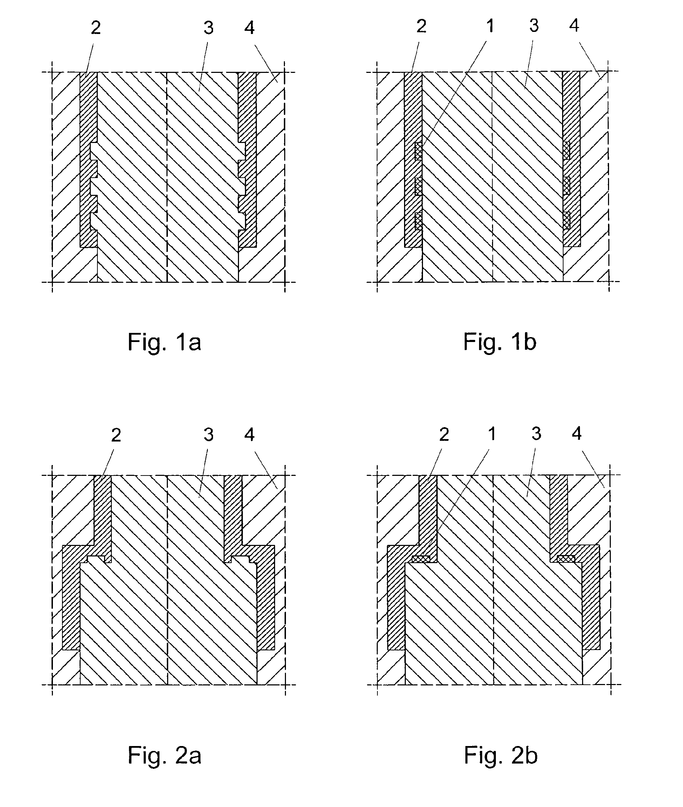

In den Figuren 1 und 2 ist diese Ausführungsform anhand zweier unterschiedlicher Situierungen der Widerstandskomponente (des leitfähigen Materials) - dargestellt.

In Fig.1 ist die Herstellung eines Spritzgussteils, das zur Herstellung radialer Schweißverbindungen geeignet ist, dargestellt.

In Fig.2 ist die Herstellung eines Spritzgussteils, das zur Herstellung einer Schweißverbindung an der Stirnseite eines Rohrs geeignet ist, dargestellt.

In den Fig. bedeuten 1 das leitfähige Material (die Widerstandskomponente), 2 die Außenhaut des Spritzgussteils, 3 den Formkern und 4 die Außenform.

In einer weiteren Ausführungsform kann in einer Spritzgießform zuerst die Widerstandskomponente gespritzt werden, anschließend die Kammer für die Außenhaut freigegeben werden und diese anschließend gespritzt werden.

In einer weiteren Ausführungsform kann die Widerstandskomponente in das Spritzgussteil eingebettet werden.
Dabei wird in einem ersten Schritt vorteilhafterweise zuerst die Innenhaut des Spritzgussteils gefertigt, anschließend die Kammer für die Widerstandskomponente freigegeben und die Widerstandkomponente gespritzt, wird, worauf in einem dritten Schritt nach Freigabe der Kammer die Außenhaut gespritzt wird.
Diese Arbeitsschritte können aber auch in umgekehrter Reihenfolge erfolgen.

Die Bewegungen im Werkzeug können hydraulisch, pneumatisch oder elektrisch erfolgen.

Auf diese Weise können Elektrofusionsspritzgussteile in einem Arbeitsgang gefertigt werden. Dadurch werden die bisher notwendigen zusätzlichen Werkzeuge, - Wickelanlagen, Roboter - zum Umlegen der Teile, Übergabestationen und eine zweite Spritzgussmaschine nicht mehr benötigt. Der Herstellprozess wird dadurch vereinfacht, und ist weniger zeitaufwendig und damit auch kostengünstiger.

## Patentansprüche

1. Elektrofusionsspritzgussteile aufweisend eine Widerstandskomponente, **dadurch gekennzeichnet, dass** die Widerstandskomponente aus einem elektrisch leitfähigen Polymer, einem duroplastischen Polymer oder einer Polymermischung besteht.

2. Elektrofusionsspritzgussteile nach Anspruch 1, **dadurch gekennzeichnet, dass** die Widerstandskomponente zusätzlich elektrisch leitfähige Partikel aufweist.

3. Verfahren zur Herstellung von Elektrofusionsspritzgussteilen, **dadurch gekennzeichnet, dass** die Elektrofusionsspritzgussteile in einem Mehr-Komponentenspritzgussverfahren hergestellt werden.

4. Verfahren nach Anspruch 3, **dadurch gekennzeichnet, dass** in der Spritzgussform vorerst die Widerstandskomponente in einer Kammer geformt wird und anschließend ein Bereich der Spritzgussform freigegeben wird und die Außenhaut des Spritzgussteils in diesem Bereich gespritzt wird.

5. Verfahren nach Anspruch 3, **dadurch gekennzeichnet, dass** vorerst die Außenhaut in der Spritzgussform zu einem Spritzgussteil gespritzt wird und solange die Hartkomponente noch in plastischem Zustand ist, die Kammer freigegeben wird und die Widerstandskomponente eingespritzt wird, wodurch die Außenhautkomponente nach außen gedrückt wird und die Widerstandskomponente endgültig formt.

6. Verfahren nach Anspruch 3, **dadurch gekennzeichnet, dass** vorerst die Außenhaut in der Spritzgussform zu einem Spritzgussteil gespritzt wird und anschließend die Kammer freigegeben wird in die die Widerstandskomponente eingespritzt wird.

7. Verfahren nach Anspruch 3, **dadurch gekennzeichnet, dass** in einem ersten Schritt zuerst die Innenhaut des Spritzgussteils gefertigt, anschließend die Kammer für die Widerstandskomponente freigegeben und die Widerstandkomponente gespritzt, wird, worauf in einem dritten Schritt nach Freigabe der Kammer die Außenhaut gespritzt wird.

8. Verfahren nach Anspruch 7, **dadurch gekennzeichnet, dass** die Arbeitsschritte in umgekehrter Reihenfolge durchgeführt werden.
